# EUROPÄISCHE PATENTSCHRIFT

(11) **EP 1 992 935 B1**
(45) Veröffentlichungstag und Bekanntmachung des Hinweises auf die Patenterteilung: **04.09.2019**
(21) Anmeldenummer: 08103371.4
(22) Anmeldetag: 04.04.2008
(51) Int. Cl.: G01N 15/06, F02D 41/14, F01N 11/00, F02D 41/02

(54) **Verfahren zum Betreiben eines stromabwärts nach einem Partikelfilter angeordneten Partikelsensors und Vorrichtung zur Durchführung des Verfahrens**
Method for operating a downstream particle sensor subordinated to a particle filter and device for carrying out the method
Procédé de fonctionnement d'un capteur à particules disposé en aval après un filtre à particules et dispositif d'exécution du procedée

(30) Priorität: 14.05.2007 DE 102007022590
(43) Veröffentlichungstag der Anmeldung: 19.11.2008
(73) Patentinhaber: ROBERT BOSCH GMBH, 70442 Stuttgart (DE)
(72) Erfinder: Baumann, Thomas, 70806 Kornwestheim (DE); Baars, Enno, 70839 Gerlingen (DE); Koehnlein, Harald, 70199 Stuttgart (DE); Schumacher, Herbert, 70839 Gerlingen (DE); Kamp, Bernhard, 71640 Ludwigsburg (DE)

(56) Entgegenhaltungen:
- EP-A1- 1 624 166
- DE-B3- 10 239 610
- DE-C1- 4 139 325
- US-A- 6 076 389

## Beschreibung

### Stand der Technik

Die Erfindung geht aus von einem Verfahren zum Betreiben eines stromabwärts nach einem Partikelfilter angeordneten Partikelsensors und von einer Vorrichtung zur Durchführung des Verfahrens nach der Gattung der unabhängigen Ansprüche.

Gegenstand der Erfindung sind weiterhin ein Steuergerätprogramm sowie ein Steuergerät-Programmprodukt.

Zur Überwachung und gegebenenfalls Regelung der Verbrennungseigenschaften bei Verbrennungsprozessen besteht ein Bedarf an einer Erfassung wenigstens eines Maßes für die Partikelkonzentration im Abgas. Insbesondere besteht ein Bedarf zur Erfassung wenigstens eines Maßes für die Partikelkonzentration im Abgas von Brennkraftmaschinen, speziell von Diesel-Brennkraftmaschinen.

In der DE 101 33 384 A1 ist ein Partikelsensor beschrieben, bei welchem Elektroden kammartig ineinander greifen, die als Interdigital-Elektroden bezeichnet werden können. Die Impedanz und/oder deren Änderung zwischen den beiden Elektroden kann zumindest als ein Maß für die Partikelmasse herangezogen werden, die in einer vorgegebenen Zeit und/oder bezogen auf eine Fahrstrecke eines Kraftfahrzeugs, in welchem eine Brennkraftmaschine als Antrieb eingesetzt ist, aufgetreten ist. Da der Messeffekt auf einer Ansammlung von Partikeln beruht, kann der Partikelsensor als sammelnder Partikelsensor bezeichnet werden.

In der DE 10 2005 034 247 A1 ist ein Verfahren zur Überwachung eines Abgasgrenzwertes einer Brennkraftmaschine mittels einer Steuerung beschrieben, die das Signal zumindest eines Abgassensors bewertet und ein Fehlersignal bei Überschreitung eines Abgasgrenzwertes bereitstellt. Dabei wird die für den gegenwärtigen Fahrzustand berechnete Emission der Brennkraftmaschine mittels eines Modells der Brennkraftmaschine ermittelt und mit dem Signal des Abgassensors oder einem daraus hergeleiteten Vergleichswert verglichen. Der Abgassensors kann ein stromabwärts nach einem Partikelfilter angeordneter Partikelsensor sein. Zur Beurteilung, ob das Partikelfilter defekt ist, wird der Quotient aus dem vom Partikelsensor gemessenen Maß für den Partikelstrom und der berechneten Partikel-Emission gebildet, der mit einem Grenzwert verglichen wird.

In der DE 10 2006 018 956 A (nicht vorveröffentlicht) ist ein Verfahren zum Bestimmen einer Partikelmasse oder eines Partikelmassenstroms in einem Abgaskanal einer Brennkraftmaschine mittels eines Partikelsensors beschrieben, wobei die erfasste Signaländerung mit einer anhand eines Brennkraftmaschinen-Modells berechneten erwarteten Signaländerung verglichen wird. Dabei ist vorgesehen, dass die erfasste Signaländerung des Partikelsensors und/oder die berechnete erwartete Signaländerung des Partikelsensors unter Berücksichtigung von Einflussgrößen auf Querempfindlichkeiten des Partikelsensors korrigiert werden. Das vorbekannte Verfahren ermöglicht es, dass auch dynamische Betriebspunktswechsel der Brennkraftmaschine, die schneller sind als die Ansprechgeschwindigkeit des Partikelsensors bezüglich der Querempfindlichkeiten des Partikelsensors korrigiert werden können. Daher kann mit dem vorbekannten Verfahren der Wirkungsgrad des Partikelfilters auch während dynamischer Vorgänge vergleichsweise genau ermittelt werden.

Darüber hinaus erfassen Partikelsensoren in EP 1 624 166 A1 die Beladung eines Abgasstroms mit Russpartikeln und DE 41 39 325 C1 die Funktionskontrolle eines Russfilters in einem Abgasstrom.

Ein sammelnder Partikelsensor sammelt nicht nur die zu detektierenden Partikel, sondern auch die im Abgas enthaltene Asche. Während die zu detektierenden Partikel im Rahmen einer Regeneration durch Erhitzen der Messstrecke des Partikelsensors auf eine Freibrenn-Temperatur beseitigt werden können, kann die auf der Messstrecke niedergeschlagene Asche nicht ohne weiteres beseitigt werden. Aber auch auf der Messstrecke eines nicht sammelnden Partikelsensors kann ein Ascheniederschlag auftreten, der das Messsignal beeinträchtigt. Aufgrund der Aschenvergiftung ist die verbleibende Betriebsdauer des Partikelsensors auf einen Wert begrenzt, bei dem die Empfindlichkeit gegenüber den zu detektierenden Partikeln unter ein vorgegebenes Maß abgefallen ist.

Der Erfindung liegt die Aufgabe zugrunde, ein Verfahren zum Betreiben eines stromabwärts nach einem Partikelfilter angeordneten Partikelsensors und eine Vorrichtung zur Durchführung des Verfahrens anzugeben, mit welchen der Partikelsensor trotz einer Beaufschlagung mit Asche, die insbesondere bei einem Defekt des Partikelfilters auftreten kann, möglichst lang betrieben werden kann.

Die Aufgabe wird durch die in den unabhängigen Ansprüchen angegebenen Merkmalen jeweils gelöst.

### Offenbarung der Erfindung

Die erfindungsgemäße Vorgehensweise weist den Vorteil auf, dass der Partikelsensor trotz einer Beaufschlagung mit Asche, die bei einem teildurchlässigen Partikelfilter bereits ab der Inbetriebnahme eines neuen Partikelfilters und bei einem nahezu undurchlässigen Partikelfilter erst ab einem Defekt des Partikelfilters auftritt, der Partikelsensor noch möglichst lange Zeit betrieben werden kann, bevor ein Austausch erforderlich ist.

Bei einem teildurchlässigen Partikelfilter ist nach der ersten Inbetriebnahme und bei einem nahezu undurchlässigen Partikelfilter ab einem festgestellten Defekt des Partikelfilters eine Restbetriebsdauer-Ermittlung vorgesehen, welche die verbleibende Betriebsdauer des Partikelsensors im Hinblick auf eine Aschenvergiftung ermittelt und/oder welche ein Korrektursignal bereitstellt, mit dem der durch die Aschenvergiftung bedingte Empfindlichkeitsverlust berücksichtigt werden kann.

Mit den erfindungsgemäß vorgesehenen Maßnahmen kann die Betriebsdauer des Partikelsensors trotz einer Aschenvergiftung bis zum Erreichen eines insbesondere von der Gesetzgebung vorgegebenen Kriteriums aufrechterhalten werden, ohne dass der Partikelsensor getauscht werden muss. Weiterhin kann während der Restbetriebsdauer die Messgenauigkeit des Partikelsensors weitgehend aufrecht erhalten werden. Insgesamt ergibt sich eine Kosteneinsparung durch das Vermeiden eines frühen Tausches des Partikelsensors.

Vorteilhafte Ausgestaltungen und Weiterbildungen der erfindungsgemäßen Vorgehensweise ergeben sich aus abhängigen Ansprüchen.

Eine Ausgestaltung sieht einen Vergleich des Partikelsensor-Messsignals mit einem Absolut-Schwellenwert oder mit einem Gradienten-Schwellenwert vor, wobei erst nach dem Erreichen eines Schwellenwerts die Restbetriebsdauer des Partikelsensors ermittelt wird.

Eine Ausgestaltung sieht vor, dass der verbleibende Wirkungsgrad des Partikelfilters als Defektausmaß bei der Ermittlung der Restbetriebsdauer berücksichtigt wird. Der Wirkungsgrad kann zum einen gemäß der aus dem eingangs genannten Stand der Technik bekannten Vorgehensweise ermittelt werden. Zum anderen ist es möglich, den Wirkungsgrad des Partikelfilters zumindest näherungsweise anhand des vom Partikelsensor bereitgestellten Messsignals bezogen auf die Betriebsdauer einer Brennkraftmaschine, in deren Abgasbereich der Partikelsensor angeordnet ist und/oder bezogen auf die von einem Kraftfahrzeug, in welchem die Brennkraftmaschine als Antrieb vorgesehen ist, zurückgelegte Fahrstrecke zu ermitteln.

Eine Ausgestaltung sieht vor, dass bei der Restbetriebsdauer-Ermittlung die von der Brennkraftmaschine emittierte Aschen-Emission berücksichtigt wird, die anhand eines Aschenmodells der Brennkraftmaschine ermittelt wird. Das Aschenmodell kann ein Maß für den Ölverbrauch und/oder die Ölqualität und/oder die Öltemperatur und/oder die Drehzahl und/oder die Last und/oder die Temperatur und/oder die Gesamt-Betriebsdauer der Brennkraftmaschine berücksichtigen.

Die Restbetriebsdauer des Partikelsensors kann alternativ oder zusätzlich anhand der Gesamt-Betriebsdauer des Partikelsensors und/oder anhand der von einem Kraftfahrzeug zurückgelegten Fahrstrecke abgeschätzt werden.

Eine Weiterbildung sieht vor, dass während der Restbetriebsdauer-Ermittlung im Rahmen eines teilweise defekten Partikelfilters eine Betriebsspannung der Sensorstrecke des Partikelsensors vermindert oder vollständig abgeschaltet wird, um die Aschen-Anlagerung zu vermindern. Alternativ oder zusätzlich kann vorgesehen sein, dass während der Restbetriebsdauer-Ermittlung die Sensorstrecke des Partikelsensors beheizt wird, wobei die Temperatur vorzugsweise auf einen Wert festgelegt wird, der oberhalb der Abgastemperatur liegt.

Die erfindungsgemäße Vorrichtung zur Durchführung des Verfahrens betrifft zunächst ein Steuergerät, das zur Durchführung des Verfahrens speziell hergerichtet ist. Vorzugsweise ist das Steuergerät speziell als Sensor-Steuergerät ausgestaltet, welches vorzugsweise zumindest die Restbetriebsdauer-Ermittlung enthält. Die Trennung zwischen dem Sensor-Steuergerät und einem Motor-Steuergerät weist den Vorteil auf, dass bei einem gegebenenfalls erforderlichen Tausch des Motor-Steuergeräts die bereits ermittelte Restbetriebsdauer weiterhin zur Verfügung steht. Das Steuergerät enthält vorzugsweise wenigstens einen elektrischen Speicher, in welchem die Verfahrensschritte als Steuergerätprogramm abgelegt sind.

Das erfindungsgemäße Steuergerätprogramm sieht vor, dass alle Schritte des erfindungsgemäßen Verfahrens ausgeführt werden, wenn es in einem Steuergerät abläuft.

Das erfindungsgemäße Steuergerät-Programmprodukt mit einem auf einem maschinenlesbaren Träger gespeicherten Programmcode führt das erfindungsgemäße Verfahren aus, wenn das Programm in einem Steuergerät abläuft.

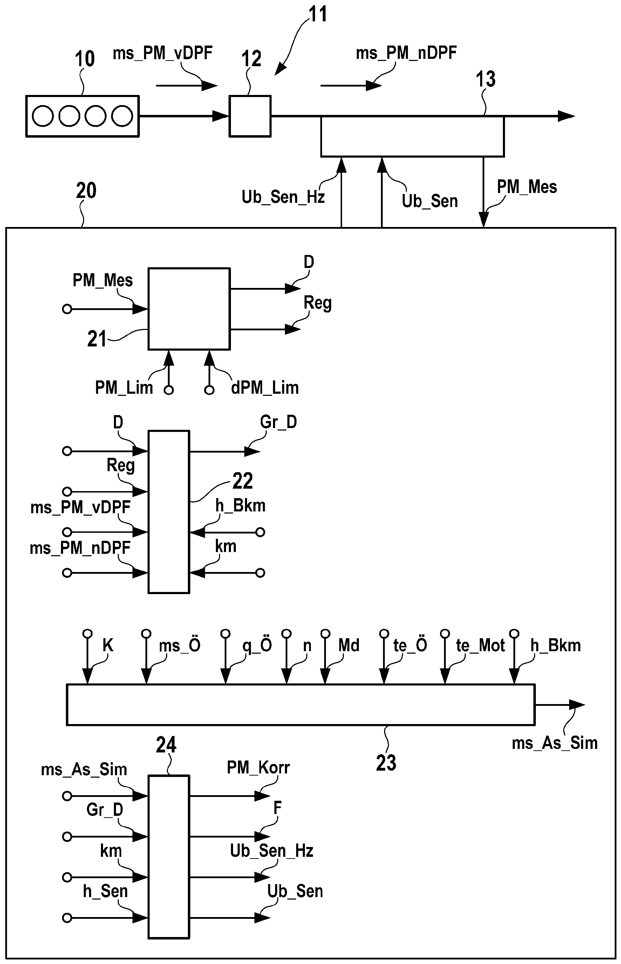

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

Die Figur zeigt ein technisches Umfeld, in welchem ein erfindungsgemäßes Verfahren zum Betreiben eines stromabwärts nach einem Partikelfilter angeordneten Partikelsensors abläuft.

Die Figur zeigt eine Brennkraftmaschine 10, in deren Abgasbereich 11 ein Partikelfilter 12 und stromabwärts nach dem Partikelfilter 12 ein Partikelsensor 13 angeordnet sind. Im Abgasbereich 11 treten stromaufwärts vor dem Partikelfilter 12 eine Partikel-Emission ms_PM_vDPF der Brennkraftmaschine 10 und stromabwärts nach dem Partikelfilter 12 ein Partikelschlupf ms_PM_nDPF auf. Der Partikelsensor 13 stellt einem Steuergerät 20 ein Partikel-Messsignal PM_Mes zur Verfügung. Das Steuergerät 20 enthält eine Messsignal-Bewertung 21, eine Defektausmaß-Ermittlung 22, ein Aschenmodell 23 sowie eine Restbetriebsdauer-Ermittlung 24. Das Steuergerät 20 stellt dem Partikelsensor 13 eine Sensor-Heizspannung Ub_Sen_Hz sowie eine Sensor-Betriebspannung Ub_Sen zur Verfügung.

Während des Betriebs der Brennkraftmaschine 10 kann aufgrund von unvollständigen Verbrennungsvorgängen die Partikel-Emission ms_PM_vDPF auftreten, die als unerwünschte Abgaskomponente vom Partikelfilter 12 aus dem Abgasstrom herausgefiltert wird.

Das Partikelfilter 12 kann beispielsweise als Keramikfilter oder Sintermetallfilter ausgestaltet sein, das einen Wirkungsgrad von nahezu 100 % aufweist, also im ordnungsgemäßen Zustand nahezu undurchlässig ist. Das Partikelfilter 12 kann weiterhin als teildurchlässiges Partikelfilter ausgestaltet sein, bei welchem stets ein zumindest geringer Partikelschlupf ms_PM_nDPF auftritt.

Der stromabwärts nach dem Partikelfilter 12 angeordnete Partikelsensor 13 ermöglicht insbesondere eine Diagnose des Partikelfilters 12 durch eine Bewertung des Partikelschlupfs ms_PM_nDPF, welchen der Partikelsensor 13 als Partikelsensor-Messsignal PM_Mes dem Steuergerät 20 zur Verfügung stellt.

Die Messsignal-Bewertung 21 überprüft das Partikelsensor-Messsignal PM_Mes auf das Überschreiten eines Absolut-Schwellenwerts PM_Lim und/oder auf das Überschreiten eines Gradienten-Schwellenwerts dPM_Lim. Der Absolut-Schwellenwert PM_Lim wird bei einem Partikelfilter 12, das einen Wirkungsgrad von nahezu 100 % aufweist, nur überschritten, wenn ein Defekt des Partikelfilters 12 aufgetreten ist. Anhand einer Bewertung der Zunahme des Partikel-Messsignals PM_Mes bezogen auf eine Basisgröße, also einer Gradienten-Bewertung, kann insbesondere bei einem teildurchlässigen Partikelfilter 12 zwischen einem ordnungsgemäß funktionierenden und einem Partikelfilter 12 mit einem beginnenden Defekt unterschieden werden, bei welchem der Wirkungsgrad unter den erwarteten Wert im ordnungsgemäßen Zustand des Partikelfilters 12 absinkt.

Die Messsignal-Bewertung 21 stellt ein Defektsignal D bereit, wenn einer der Schwellenwerte PM_Lim, dPM_Lim überschritten ist. Weiterhin kann die Messsignal-Bewertung 21 ein Regenerationssignal Reg bereitstellen, welches eine Regeneration eines als sammelnden Partikelsensor ausgestalteten Partikelsensors 13 veranlasst. Bei einem teildurchlässigen Partikelfilter 12 treten Regenerationsvorgänge des Partikelsensors 13 während des normalen Betriebs des Partikelfilters 12 auf. Bei einem Partikelfilter 12 mit einem Wirkungsgrad von nahezu 100 % treten Regenerationsvorgänge normalerweise erst nach dem Auftreten des Defektsignals D auf.

Bei einem teildurchlässigen Partikelfilter 12 tritt ein Partikelschlupf ms_PM_nDPF bereits ab der Inbetriebnahme auf. Bei einem nahezu undurchlässig in Partikelfilter 12 tritt ein nennenswerter Partikelschlupf ms_PM_nDPF nur bei einem zumindest teilweise defekten Partikelfilter 12 auf. Der Partikelschlupf ms_PM_nDPF enthält einerseits die vom Partikelsensor 13 zu detektierenden Partikel, andererseits jedoch Asche, die beispielsweise bei der Verbrennung des der Brennkraftmaschine 10 zugeführten Kraftstoffs mit dessen Additiven und insbesondere bei der Verbrennung von Motoröl in der Brennkraftmaschine 10 entsteht. Da der Partikelsensor 13 unabhängig vom Sensorprinzip neben den zu detektierenden Partikeln im allgemeinen auch die im Abgas enthaltene Asche anlagert, von welcher der Partikelsensor 13 nicht mehr regeneriert werden kann, muss mit einer Aschenvergiftung des Partikelsensors 13 gerechnet werden. Die zunehmende Beaufschlagung des Partikelsensors 13 mit Asche begrenzt aufgrund der zunehmenden Aschenvergiftung die Restbetriebsdauer des Partikelsensors 13, die in der Restbetriebsdauer-Ermittlung 24 ermittelt wird.

Die Restbetriebsdauer-Ermittlung 24 ermittelt die verbleibende Betriebsdauer des Partikelsensors 13 bei einem teildurchlässigen Filter bereits nach der ersten Inbetriebnahme des Partikelfilter 12 beziehungsweise des Partikelsensors 13. Bei einem nahezu undurchlässig in Partikelfilter ist vorzugsweise vorgesehen, dass sie Restbetriebsdauer-Ermittlung 24 erst nach einem festgestellten Defekt des Partikelfilters 12 die verbleibende Betriebsdauer des Partikelsensors 13 ermittelt.

Unabhängig von der Ausgestaltung des Partikelfilters 12 kann trotz eines aufgetretenen Defekts des Partikelfilters 12 ein weiterer Betrieb des Partikelfilters 12 vorgesehen sein, wenn der Defekt innerhalb eines zulässigen Bereichs liegt, der von der Abgasgesetzgebung festgelegt werden kann. Für den Fall, dass das Partikelfilter 12 trotz eines aufgetretenen Defekts weiterhin betrieben werden kann, wird in der Restbetriebsdauer-Ermittlung 24 das Defektausmaß Gr_D berücksichtigt, welches die Defektausmaß-Ermittlung 22 zur Verfügung stellt.

Die Defektausmaß-Ermittlung 22 ermittelt das Defektausmaß Gr_D nach dem Auftreten des Defektsignals D beispielsweise in Abhängigkeit von der Häufigkeit der Regenerationsvorgänge, welche durch das Regenerationssignal Reg ausgelöst werden. Alternativ oder zusätzlich kann das Defektausmaß Gr_D anhand der Gesamt-Brennkraftmaschinen-Betriebsdauer h_Bkm und/oder anhand der zurückgelegten Fahrstrecke eines Kraftfahrzeugs abgeschätzt werden, in welchem die Brennkraftmaschine 10 als Antrieb eingesetzt ist. Alternativ oder zusätzlich kann das Defektausmaß Gr_D aus dem verbleibenden Wirkungsgrads des Partikelfilters 12 abgeschätzt werden, welcher anhand beispielsweise des Partikelschlupfs ms_PM_nDPF bezogen auf die Partikel-Emission ms_PM_vDPF ermittelt werden kann. Die Ermittlung des Partikelfilter-Wirkungsgrads ist im Detail aus dem eingangs genannten Stand der Technik entnehmbar, auf den jeweils vollinhaltlich Bezug genommen wird.

Das Aschenmodell 23 ermittelt die berechnete Aschen-Emission ms_As_Sim beispielsweise anhand eines Kraftstoffsignals K, welches die Kraftstoffart wie beispielsweise ein Benzin/Ethanol-Gemisch, Bio-Diesel usw. widerspiegelt, und/oder anhand eines aus dem Signal eines Öl-Füllstandssensors ermittelten Maßes ms_Ö für den Ölverbrauch und/oder in Abhängigkeit von der Öltemperatur te_Ö und/oder in Abhängigkeit der von einem Öl-Qualitätssensor erfassten Ölqualität q_Ö und/oder in Abhängigkeit von der Drehzahl n und/oder der Last Md und/oder in Abhängigkeit von der Temperatur te_Mot und/oder in Abhängigkeit von der Gesamt-Betriebsdauer h_Bkm als Maß für die verschleißbedingte Zunahme des Ölverbrauchs der Brennkraftmaschine 10.

Die Restbetriebsdauer-Ermittlung 24 ermittelt die verbleibende Betriebsdauer des Partikelsensors 13 im Hinblick auf die Aschenvergiftung beispielsweise anhand einer Integration der berechneten Aschen-Emission ms_As_Sim, die mit dem gegebenenfalls vorhandenen Defektausmaß Gr_D gewichtet wird. Bei einem höheren gegebenenfalls vorhandenen Defektausmaß Gr_D muss mit einer geringeren Restbetriebsdauer des Partikelsensors 13 aufgrund der höheren Aschenvergiftung bezogen auf eine Basisgröße wie beispielsweise Zeit oder Fahrstrecke gerechnet werden. Alternativ oder zusätzlich kann die Restbetriebsdauer-Ermittlung 24 die verbleibende Betriebsdauer des Partikelsensors 13 aus der Gesamt-Betriebsdauer h_Sen des Partikelsensors 13 und/oder der von einem Kraftfahrzeug zurückgelegten Fahrstrecke km abschätzen.

Im Extremfall ermittelt die Restbetriebsdauer-Ermittlung 14 die verbleibende Betriebsdauer des Partikelsensors 13 ohne weitere Eingangssignale allein anhand der erfassten Betriebsdauer des Partikelsensors 13, wobei davon ausgegangen wird, dass die maximal mögliche Betriebsdauer des Partikelsensors 13 fest vorgegeben ist.

Die Restbetriebsdauer-Ermittlung 24 ermittelt alternativ oder vorzugsweise zusätzlich ein Partikel-Korrektursignal PM_Korr, mit welchem die Empfindlichkeit des Partikelsensors 13 beispielsweise durch eine Anpassung der Bewertung des Partikelsensor-Messsignals PM_Mes korrigiert wird. Dadurch kann trotz der auftretenden Aschenvergiftung das Maß für den momentanen Partikelstrom oder für die in einem Zeitintervall aufgetretenen Partikel vergleichsweise genau aus dem Partikelsensor-Messsignal PM_Mes während der Restbetriebsdauer ermittelt werden. Die Restbetriebsdauer-Ermittlung 24 stellt weiterhin alternativ oder zusätzlich beim Erreichen eines Betriebsdauer-Schwellenwerts ein Fehlersignal F bereit, welches einem Betreiber der Brennkraftmaschine 10 zur Anzeige gebracht und/oder in einen Fehlerspeicher hinterlegt werden kann.

Alternativ oder zusätzlich kann die Restbetriebsdauer-Ermittlung 24 während der verbleibenden Betriebsdauer des Partikelsensors 13 Maßnahmen ergreifen, welche die Anlagerung von Asche vermindert, um die verbleibende Betriebsdauer des Partikelsensors 13 zu verlängern. Die Maßnahmen können auch anderweitig ausgelöst werden, sodass die Restbetriebsdauer-Ermittlung 24 lediglich Kenntnis von der oder den Maßnahmen erhält und bei der Ermittlung der verbleibenden Betriebsdauer des Partikelsensors 13 berücksichtigen kann. Eine erste Maßnahme sieht beispielsweise eine ständige Beheizung des Partikelsensors 13 mit der Sensor-Heizspannung Ub_Sen_Hz auch außerhalb von Regenerationsvorgängen auf eine Betriebstemperatur vor, die vorzugsweise oberhalb der Abgastemperatur im Bereich des Partikelsensors 13 liegt.

Durch den entstehenden thermophoretischen Effekt wird die Anlagerung von Asche vermindert.

Eine weitere Maßnahme sieht beispielsweise die Verminderung der Sensor-Betriebsspannung Ub_Sen eines resistiven Partikelsensors 13 mit beispielsweise Interdigital-Elektroden vor. Durch die Verminderung des polarisierenden Einflusses beziehungsweise Verminderung der Anziehungskraft von bereits polarisierter/elektrisch geladener Asche wird ebenfalls die Anlagerung von Asche vermindert.

## Patentansprüche

1. Verfahren zum Betreiben eines in einem Abgasstrom nach einem Partikelfilter (12) stromabwärts angeordneten Partikelsensors (13), bei dem eine Aschenvergiftung auftreten kann, **dadurch gekennzeichnet, dass** eine Restbetriebsdauer-Ermittlung (24) vorgesehen ist, welche die verbleibende Betriebsdauer des Partikelsensors (13) im Hinblick auf eine Aschenvergiftung ermittelt, und/oder welche ein Korrektursignal (PM_Korr) bereitstellt, mit welchem der Empfindlichkeitsverlust durch die Aschenvergiftung berücksichtigt wird.

2. Verfahren nach Anspruch 1, **dadurch gekennzeichnet, dass** die Restbetriebsdauer-Ermittlung (24) die verbleibende Betriebsdauer des Partikelsensors (13) ab der ersten Inbetriebnahme des Partikelsensors (13) ermittelt.

3. Verfahren nach Anspruch 1, **dadurch gekennzeichnet, dass** anhand einer Bewertung des Partikelsensor-Sensorsignals (PM_Mes) ein Defekt des Partikelfilters (12) festgestellt wird und dass die Restbetriebsdauer-Ermittlung (24) die verbleibende Betriebsdauer des Partikelsensors (13) nach dem Erkennen eines Partikelfilter-Defekts ermittelt.

4. Verfahren nach Anspruch 3, **dadurch gekennzeichnet, dass** die Bewertung, anhand welcher ein Defekt des Partikelfilters (12) festgestellt wird, einen Vergleich des Partikelsensor-Sensorsignals (PM_Mes) mit einem Absolut-Schwellenwert (PM_Lim) und/oder oder Gradienten-Schwellenwert (dPM_Lim) vorsieht.

5. Verfahren nach Anspruch 1, **dadurch gekennzeichnet, dass** der Wirkungsgrad des Partikelfilters (12) als Defektausmaß (Gr_D) von der Restbetriebsdauer-Ermittlung (24) berücksichtigt wird.

6. Verfahren nach Anspruch 5, **dadurch gekennzeichnet, dass** der Wirkungsgrad des Partikelfilters (12) anhand des Partikelsensor-Messsignals (PM_Mes) bezogen auf die Gesamt-Betriebsdauer (h_Bkm) einer Brennkraftmaschine (10) in deren Abgasbereich (11) das Partikelfilter (12) und der Partikelsensor (13) angeordnet sind und/oder bezogen auf die von einem Kraftfahrzeug, in welchem die Brennkraftmaschine (10) als Antrieb vorgesehen ist, zurückgelegte Fahrstrecke (km) ermittelt wird.

7. Verfahren nach Anspruch 5, **dadurch gekennzeichnet, dass** der Wirkungsgrad anhand des Partikelsensor-Messsignals (PM_Mes) und anhand der von einem Aschenmodell (23) berechneten Aschen-Emission (ms_As_Sim) einer Brennkraftmaschine (10) ermittelt wird.

8. Verfahren nach Anspruch 1, **dadurch gekennzeichnet, dass** die Restbetriebsdauer-Ermittlung (24) die anhand eines Aschenmodells (23) ermittelte Aschen-Emission (ms_As_Sim) einer Brennkraftmaschine (10) berücksichtigt.

9. Verfahren nach Anspruch 7 oder 8, **dadurch gekennzeichnet, dass** das Aschenmodell (23) die Kraftstoffart (K) und/oder ein Maß (ms_Ö) für den Ölverbrauch und/oder die Ölqualität (q_Ö) und/oder die Öltemperatur (te_Ö) und/oder die Drehzahl (n) und/oder die Last (Md) und/oder die Temperatur (te_Mot) und/oder die Gesamt-Betriebsdauer (h_Bkm) der Brennkraftmaschine (10) berücksichtigt.

10. Verfahren nach Anspruch 1, **dadurch gekennzeichnet, dass** die Restbetriebsdauer-Ermittlung (23) die Gesamt-Betriebsdauer (h_Sen) des Partikelsensors (13) und/oder die von einem Kraftfahrzeug, in welchem als Antrieb eine Brennkraftmaschine (10) angeordnet ist, in deren Abgasbereich (11) das Partikelfilter (12) und der Partikelsensor (13) angeordnet sind, zurückgelegte Fahrstrecke (km) berücksichtigt.

11. Verfahren nach Anspruch 1, **dadurch gekennzeichnet, dass** eine Betriebsspannung (Ub_Sen) des Partikelsensors (13) zumindest zeitweise vermindert oder vollständig abschaltet wird, um die Aschen-Anlagerung zu vermindern.

12. Verfahren nach Anspruch 1, **dadurch gekennzeichnet, dass** dem Partikelsensor (13) eine Sensor-Heizspannung (Ub_Sen_Hz) zumindest zeitweise zur Verfügung gestellt wird, um die Aschen-Anlagerung zu vermindern.

13. Vorrichtung zum Betreiben eines Partikelsensors (13), **dadurch gekennzeichnet, dass** zumindest ein speziell hergerichtetes Steuergerät (20) zur Durchführung des Verfahrens nach einem der vorhergehenden Ansprüche vorgesehen ist.

14. Vorrichtung nach Anspruch 13, **dadurch gekennzeichnet, dass** das Steuergerät (20) zusätzlich zu einem Brennkraftmaschinen-Steuergerät als separates Steuergerät (20) vorgesehen ist, und dass das Sensor-Steuergerät (20) zumindest eine Restbetriebsdauer-Ermittlung (24) enthält.

15. Vorrichtung nach Anspruch 13 oder 14, **dadurch gekennzeichnet, dass** das Steuergerät (20) eine Messsignal-Bewertung (21), eine Defektausmaß-Ermittlung (22) sowie ein Aschenmodell (23) enthält.

16. Steuergerätprogramm, das alle Schritte eines Verfahrens nach einem der Ansprüche 1 bis 12 ausführt, wenn das Programm in einem Steuergerät (20) abläuft.

17. Steuergerät-Programmprodukt mit einem auf einem maschinenlesbaren Träger gespeicherten Programmcode zur Durchführung des Verfahrens nach einem der Ansprüche 1 bis 12 ausführt, wenn das Programm in einem Steuergerät (20) ausgeführt wird.

## Claims

1. Method for operating a particle sensor (13) arranged downstream of a particle filter (12) in a stream of exhaust gas in which an ash contamination can occur, **characterized in that** a remaining operating time determination (24) is provided, determining the remaining operating time of the particle sensor (13) in view of an ash contamination, and/or providing a correction signal (PM_Korr) with which allowance is made for the loss of sensitivity due to the ash contamination.

2. Method according to Claim 1, **characterized in that** the remaining operating time determination (24) determines the remaining operating time of the particle sensor (13) from when the particle sensor (13) was put into operation for the first time.

3. Method according to Claim 1, **characterized in that**, on the basis of an assessment of the particle-sensor sensor signal (PM_Mes), a defect of the particle filter (12) is established and **in that** the remaining operating time determination (24) determines the remaining operating time of the particle sensor (13) after the detection of a particle filter defect.

4. Method according to Claim 3, **characterized in that** the assessment on the basis of which a defect of the particle filter (12) is established provides a comparison of the particle-sensor sensor signal (PM_Mes) with an absolute threshold value (PM_Lim) and/or or gradient threshold value (dPM_Lim).

5. Method according to Claim 1, **characterized in that** allowance is made in the remaining operating time determination (24) for the efficiency of the particle filter (12) as the extent of a defect (Gr_D).

6. Method according to Claim 5, **characterized in that** the efficiency of the particle filter (12) is determined on the basis of the particle-sensor measuring signal (PM_Mes) with respect to the overall operating time (h_Bkm) of an internal combustion engine (10) in the exhaust gas area (11) of which the particle filter (12) and the particle sensor (13) are arranged and/or with respect to the distance (km) covered by a motor vehicle in which the internal combustion engine (10) is provided as a drive.

7. Method according to Claim 5, **characterized in that** the efficiency is determined on the basis of the particle-sensor measuring signal (PM_Mes) and on the basis of the ash emission (ms_As_Sim) of an internal combustion engine (10) calculated from an ash model (23).

8. Method according to Claim 1, **characterized in that** the remaining operating time determination (24) makes allowance for the ash emission (ms_As_Sim) of an internal combustion engine (10) determined on the basis of an ash model (23).

9. Method according to Claim 7 or 8, **characterized in that** the ash model (23) makes allowance for the type of fuel (K) and/or a measure (Ms_Ö) of the oil consumption and/or the oil quality (q_Ö) and/or the oil temperature (te_Ö) and/or the speed (n) and/or the load (Md) and/or the temperature (te_Mot) and/or the overall operating time (h_Bkm) of the internal combustion engine (10).

10. Method according to Claim 1, **characterized in that** the remaining operating time determination (23) makes allowance for the overall operating time (h_Sen) of the particle sensor (13) and/or the distance (km) covered by a motor vehicle in which an internal combustion engine (10) in the exhaust gas area (11) of which the particle filter (12) and the particle sensor (13) are arranged is arranged as a drive.

11. Method according to Claim 1, **characterized in that** an operating voltage (Ub_Sen) of the particle sensor (13) is reduced or completely switched off, at least for a time, in order to reduce the deposition of ash.

12. Method according to Claim 1, **characterized in that** a sensor heating voltage (Ub_Sen_Hz) is made available to the particle sensor (13), at least for a time, in order to reduce the deposition of ash.

13. Device for operating a particle sensor (13), **characterized in that** at least one specially set-up control unit (20) is provided for carrying out the method according to one of the preceding claims.

14. Device according to Claim 13, **characterized in that** the control unit (20) is provided as a separate control unit (20) in addition to an internal combustion engine control unit, and **in that** the sensor control unit (20) includes at least a remaining operating time determination (24).

15. Device according to Claim 13 or 14, **characterized in that** the control unit (20) includes a measuring signal assessment (21), an extent of defect determination (22) and also an ash model (23).

16. Control unit program, which performs all of the steps of a method according to one of Claims 1 to 12 when the program runs in a control unit (20).

17. Control unit program product with a program code stored on a machine-readable carrier for carrying out the method according to one of Claims 1 to 12 performs when the program is performed in a control unit (20).

## Revendications

1. Procédé de fonctionnement d'un capteur de particules (13) disposé dans un courant de gaz d'échappement en aval après un filtre à particules (12), dans lequel il peut se produire un empoisonnement aux cendres, **caractérisé en ce qu'**il est prévu une détermination de la durée de fonctionnement résiduelle (24), qui détermine la durée de fonctionnement restante du capteur de particules (13) par rapport à un empoisonnement aux cendres, et/ou qui fournit un signal de correction (PM_Korr), avec lequel on tient compte d'une perte de sensibilité due à l'empoisonnement aux cendres.

2. Procédé selon la revendication 1, **caractérisé en ce que** la détermination de la durée de fonctionnement résiduelle (24) détermine la durée de fonctionnement restante du capteur de particules (13) à partir de la première mise en service du capteur de particules (13).

3. Procédé selon la revendication 1, **caractérisé en ce que** l'on constate à l'aide d'une évaluation du signal de capteur du capteur de particules (PM_Mes) un défaut du filtre à particules (12) et **en ce que** la détermination de la durée de fonctionnement résiduelle (24) détermine la durée de fonctionnement restante du capteur de particules (13) après la constatation d'un défaut du filtre à particules.

4. Procédé selon la revendication 3, **caractérisé en ce que** l'évaluation, à l'aide de laquelle on constate un défaut du filtre à particules (12), prévoit une comparaison du signal de capteur du capteur de particules (PM_Mes) avec une valeur de seuil absolue (PM_Lim) et/ou ou valeur de seuil de gradient (dPM_Lim).

5. Procédé selon la revendication 1, **caractérisé en ce que** l'on tient compte du rendement du filtre à particules (12) comme ampleur du défaut (Gr_D) par la détermination de la durée de fonctionnement résiduelle (24).

6. Procédé selon la revendication 5, **caractérisé en ce que** l'on détermine le rendement du filtre à particules (12) à l'aide du signal de mesure du capteur de particules (PM_Mes) rapporté à la durée de fonctionnement totale (h_Bkm) d'un moteur à combustion interne (10) dans la région des gaz d'échappement (11) duquel le filtre à particules (12) et le capteur de particules (13) sont disposés et/ou rapporté à la distance (km) parcourue par un véhicule automobile, dans lequel le moteur à combustion interne (10) est prévu comme entraînement.

7. Procédé selon la revendication 5, **caractérisé en ce que** l'on détermine le rendement à l'aide du signal de mesure du capteur de particules (PM_Mes) et à l'aide de l'émission de cendres (ms_As_Sim) d'un moteur à combustion interne (10) calculée par un modèle des cendres (23).

8. Procédé selon la revendication 1, **caractérisé en ce que** la détermination de la durée de fonctionnement résiduelle (24) tient compte de l'émission de cendres (ms_As_Sim) d'un moteur à combustion interne (10) déterminée à l'aide d'un modèle des cendres (23).

9. Procédé selon une revendication 7 ou 8, **caractérisé en ce que** le modèle des cendres (23) tient compte de la nature du carburant (K) et/ou d'une mesure (ms_Ö) pour la consommation d'huile et/ou de la qualité de l'huile (q_Ö) et/ou de la température de l'huile (te_Ö) et/ou du nombre de tours (n) et/ou de la charge (Md) et/ou de la température (te_Mot) et/ou de la durée de fonctionnement totale (h_Bkm) du moteur à combustion interne (10).

10. Procédé selon la revendication 1, **caractérisé en ce que** la détermination de la durée de fonctionnement résiduelle (23) tient compte de la durée de fonctionnement totale (h_Sen) du capteur de particules (13) et/ou de la distance (km) parcourue par un véhicule automobile, dans lequel un moteur à combustion interne (10) est disposé comme entraînement, dans la région des gaz d'échappement (11) duquel le filtre à particules (12) et le capteur de particules (13) sont disposés.

11. Procédé selon la revendication 1, **caractérisé en ce que** l'on diminue au moins temporairement ou on coupe complètement une tension de fonctionnement (Ub_Sen) du capteur de particules (13), afin de réduire le dépôt de cendres.

12. Procédé selon la revendication 1, **caractérisé en ce qu'**une tension de chauffage de capteur (Ub_Sen_Hz) est fournie au moins temporairement au capteur de particules (13) afin de réduire le dépôt de cendres.

13. Dispositif pour faire fonctionner un capteur de particules (13), **caractérisé en ce qu'**il est prévu au moins un appareil de commande (20) spécialement conçu pour l'exécution du procédé selon l'une quelconque des revendications précédentes.

14. Dispositif selon la revendication 13, **caractérisé en ce que** l'appareil de commande (20) est prévu comme appareil de commande séparé (20) en plus d'un appareil de commande du moteur à combustion interne, et **en ce que** l'appareil de commande de capteur (20) contient au moins une détermination de la durée de fonctionnement résiduelle (24).

15. Dispositif selon une revendication 13 ou 14, **caractérisé en ce que** l'appareil de commande (20) contient une évaluation du signal de mesure (21), une détermination de l'ampleur du défaut (22) ainsi qu'un modèle des cendres (23).

16. Programme d'appareil de commande, qui exécute toutes les étapes d'un procédé selon l'une quelconque des revendications 1 à 12, lorsque le programme est exécuté dans un appareil de commande (20).

17. Produit de programme d'appareil de commande avec un code de programme mémorisé sur un support lisible à la machine pour l'exécution du procédé selon l'une quelconque des revendications 1 à 12 éxécute, lorsque le programme est exécuté dans un appareil de commande (20).
